# FASCICULE DE BREVET EUROPEEN

(11) **EP 3 238 020 B1**
(45) Date de publication et mention de la délivrance du brevet: **07.06.2023**
(21) Numéro de dépôt: 15823705.7
(22) Date de dépôt: 22.12.2015
(51) Int. Cl.: G06F 3/0482, G06F 3/04842

(54) **PROCÉDÉ DE NAVIGATION DANS UN CONTENU AFFICHE SUR UN ÉCRAN AU MOYEN D'UNE TÉLÉCOMMANDE.**
VERFAHREN ZUR NAVIGATION DURCH MIT EINER FERNBEDIENUNG AUF EINEM BILDSCHIRM ANGEZEIGTEN INHALT
METHOD FOR NAVIGATING CONTENT DISPLAYED ON A SCREEN BY MEANS OF A REMOTE CONTROL.

(30) Priorité: 23.12.2014 FR 1463228
(43) Date de publication de la demande: 01.11.2017
(73) Titulaire: Softathome, 92700 Colombes (FR)
(72) Inventeur: MOURMANT, Frédéric, 78800 Houilles (FR); MAKOWSKI, Wojciech, 78230 Le Pecq (FR)
(74) Mandataire: Cabinet Beau de Loménie
(86) Numéro de dépôt international: PCT/FR2015/053728
(87) Numéro de publication internationale: WO 2016/102893

(56) Documents cités:
- EP-A2- 1 571 536
- EP-A2- 2 284 651

## Description

L'invention se situe dans le domaine des interfaces homme-machines et plus particulièrement dans le domaine des techniques permettant à un utilisateur de naviguer dans un contenu affiché sur un écran au moyen d'une télécommande.

L'invention trouve une application privilégiée mais non limitative pour la navigation sur un écran de téléviseur.

Le document EP 2 284 651 A2 décrit un mécanisme d'affichage visuel pour un dispositif électronique, cet affichage étant divisé en régions, chacune des régions étant associée à une touche sur un clavier.

Le document EP 1 571 536 A2 décrit un procédé pour faciliter la navigation à travers tout type de contenu visualisable sur des dispositifs portables. Les touches d'un clavier peuvent être utilisées pour parcourir, zoomer et/ ou zoomer sur le contenu.

Dans le contexte particulier des écrans de téléviseur, la navigation s'effectue généralement en utilisant les quatre flèches « haut », « bas », « droite », « gauche » et d'un bouton de validation de type « OK » de la télécommande du téléviseur.

Cette méthode de navigation n'est pas adaptée lorsqu'il s'agit de déplacer un pointeur précisément pour sélectionner un objet graphique de petite taille, en particulier lorsque l'utilisateur se trouve relativement éloigné de l'écran.

L'invention vise un procédé de navigation qui ne présente pas ces inconvénients.

### Objet et résumé de l'invention

Plus précisément, l'invention vise un procédé de navigation dans un contenu affiché sur un écran au moyen d'une télécommande comportant un pavé numérique, ce procédé étant défini dans la revendication 1.

Ainsi, et d'une façon générale, l'invention propose un procédé de navigation permettant de se déplacer au sein du contenu initial de façon progressive pour converger précisément vers la cible à atteindre, la précision du déplacement souhaité étant directement liée au nombre de clicks de l'utilisateur mais indépendante de la précision du geste de l'utilisateur.

Le procédé selon l'invention offre une fonction de zoom permettant à l'utilisateur d'atteindre des cibles de petites tailles, même lorsqu'il se trouve relativement éloigné de l'écran

Dans le procédé selon l'invention, le contenu initial est ainsi divisé au premier niveau en un damier 3x3 de 9 cases, préférentiellement de même taille, chaque case étant elle-même divisée de la sorte de façon récursive.

L'invention offre ainsi une possibilité de navigation très simple et très intuitive, de sorte qu'il n'est pas nécessaire, notamment dans ce mode de réalisation de représenter graphiquement le partitionnement à l'utilisateur sur l'écran du téléviseur.

Le procédé de navigation selon l'invention comporte, afin d'apporter une aide visuelle à la navigation, une étape de représentation graphique du partitionnement du contenu.

Cette représentation peut se matérialiser par un quadrillage délimitant les différentes zones ou sous-zones, ou par d'autres moyens graphiques, comme un changement de texture ou de couleur.

Dans un mode particulier de réalisation, le procédé de navigation selon l'invention comporte une étape d'affichage d'un pointeur dans la zone ou dans la sous-zone sélectionnée.

Le pointeur peut par exemple être positionné au centre de la zone ou de la sous-zone sélectionnée.

On peut aussi envisager une aide sonore en associant à chaque zone ou sous-zone de la partition un signal sonore propre à la position de la zone ou sous-zone dans la partition. Ce mode particulier de réalisation de l'invention est particulièrement adapté à des utilisateurs mal voyants.

Dans un mode particulier de réalisation non revendiqué, le procédé de navigation permet une profondeur de navigation déterminée en fonction du contenu.

Ce mode particulier permet à l'utilisateur de comprendre très facilement, lorsqu'il n'est plus en mesure d'atteindre un niveau supérieur de navigation qu'il a déjà atteint le niveau de détails le plus fin, même lorsqu'il se trouve à une distance de l'écran qui ne lui permet pas d'apprécier ce niveau de détails.

Dans un mode de réalisation particulièrement adapté à la navigation sur Internet, cette profondeur peut dépendre du nombre d'objets cliquables dans le contenu.

Dans un mode de réalisation de l'invention, pour les applications de navigation sur Internet sur écran de télévision notamment, le pointeur peut automatiquement être positionné sur un lien de la zone ou de la sous-zone sélectionnée, ledit lien étant activable par un appui sur une touche de ladite télécommande.

### Brève description des dessins

D'autres caractéristiques et avantages de l'invention apparaîtront à la lumière de la description qui suit, faite en référence aux dessins annexés dans lesquels :
- la figure 1 illustre un système dans lequel l'invention peut être utilisée ;
- la figure 2 représente sous forme d'organigramme, les principales étapes d'un procédé de navigation conforme à un mode de réalisation de l'invention ;
- la figure 3 illustre deux niveaux de partitionnement conformes à un mode particulier de réalisation de l'invention ; et
- les figures 4A à 4C illustrent un exemple d'utilisation de l'invention.

### Description détaillée d'un mode de réalisation

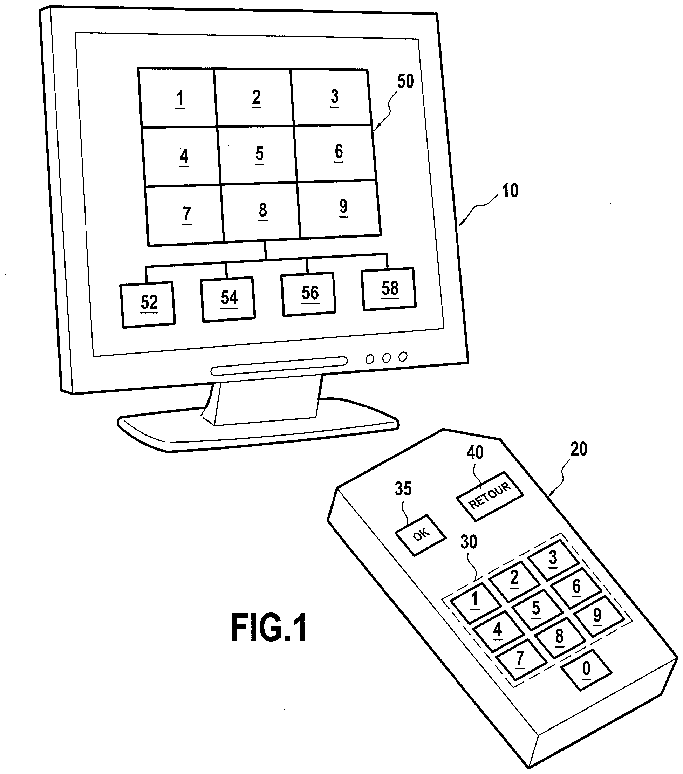

La figure 1 illustre un système dans lequel l'invention peut être utilisée. Ce système comporte un téléviseur 10 avec un écran 50 et une télécommande 20.

La télécommande 20 comporte un pavé numérique 30 comportant 9 touches numérotée de 1 à 9 agencées dans une matrice 3x3, une touche 0 de zoom, une touche 35 « OK » permettant de sélectionner un lien cliquable et une touche « RETOUR » 40 permettant de revenir à la partition de niveau inférieur à la partition courante.

Dans le mode de réalisation décrit ici, le procédé de navigation traite l'appui sur la touche de zoom et la touche de retour, ces traitements n'étant pas revendiqués.

Le téléviseur 10 comporte un processeur 52, une mémoire morte de type ROM 54, une mémoire vive 56 et un capteur 58 apte à capter des signaux émis par la télécommande 20.

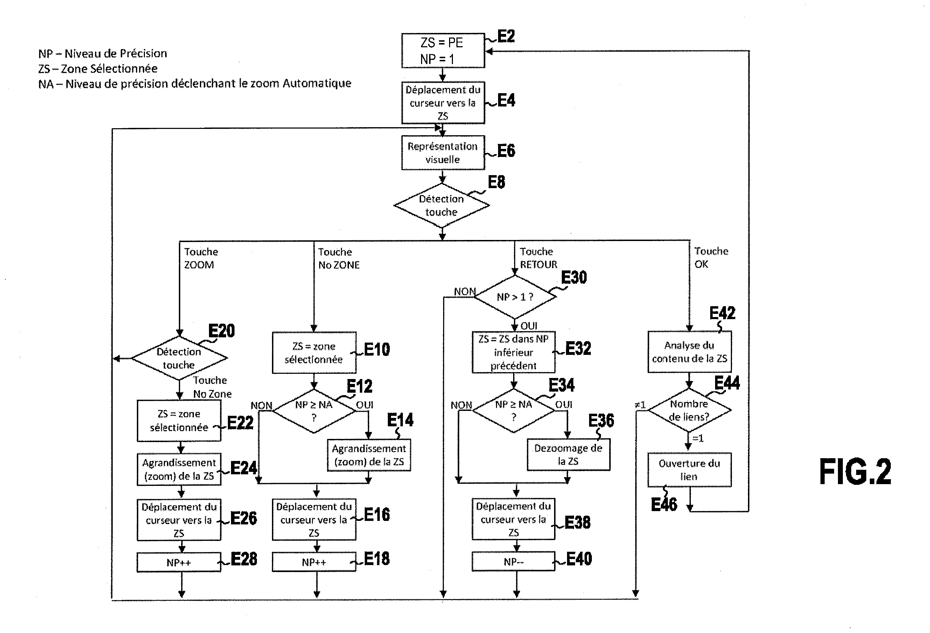

La mémoire morte 58 comporte un programme d'ordinateur apte à exécuter les étapes d'un procédé de navigation conforme à l'invention et dont nous allons maintenant décrire les principales étapes en référence à la figure 2.

Au cours d'une étape E2, on initialise :
- une variable ZS représentant un identifiant d'une zone ou d'une sous-zone sélectionnée avec une valeur PE indiquant que la zone initialement sélectionnée est l'écran dans son intégralité ; et
- une variable NP représentant la profondeur courante de navigation avec la valeur 1 représentative du fait que le contenu de l'écran n'a pas encore été partitionné.

Le traitement de la variable NP n'est pas revendiqué.

Au cours d'une étape E4, on déplace le curseur au centre de la zone sélectionnée ZS, autrement dit au centre de l'écran.

Au cours d'une étape E6 on représente la partition graphiquement.

Au cours d'une étape E8, on détermine si une touche de la télécommande 20 a été sélectionnée par l'utilisateur.

Si à l'étape E8 on détecte qu'une des touches 1 à 9 du pavé numérique 30 a été sélectionnée, on affecte, au cours d'une étape E10 le contenu de la variable ZS avec l'identifiant de la zone ou de la sous-zone de la zone courante correspondant à la position de la touche sélectionnée dans le pavé numérique 30.

L'étape E10 est suivie par une étape E12 au cours de laquelle on vérifie si la profondeur courante NP est supérieure ou égale à une constante NA correspondant au niveau de profondeur déclenchant le zoom automatique.

Si tel est le cas, l'étape E12 est suivie par une étape E14 au cours de laquelle on agrandit la zone sélectionnée ZS.

L'étape E14 est suivie par une étape E16 au cours de laquelle on déplace le curseur au centre de la zone sélectionnée ZS ainsi agrandie.

Lorsqu'il est déterminé à l'étape E12 que la profondeur courante NP est inférieure à la profondeur NA de déclenchement du zoom automatique, la zone sélectionnée n'est pas agrandie. Dans ce cas, l'étape E12 est directement suivie par l'étape E16 au cours de laquelle on déplace le curseur au centre de la zone sélectionnée ZS sans que celle-ci ait été agrandie.

L'étape E16 est suivie par une étape E18 au cours de laquelle on incrémente la profondeur courante NP d'une unité. L'étape E18 est suivie par l'étape E6 déjà décrite de représentation graphique de la partition.

Si à l'étape E8 on détecte que la touche de zoom 0 a été sélectionnée, le programme attend au cours d'une étape E20 que l'utilisateur sélectionne une des touches 1 à 9 du pavé numérique 30 pour désigner quelle zone ou sous-zone doit être agrandie.

L'étape E20 est suivie par une étape E22 au cours de laquelle on affecte le contenu de la variable ZS avec l'identifiant de la zone ou de la sous-zone de la zone courante correspondant à la position de la touche sélectionnée dans le pavé numérique 30.

L'étape E22 est suivie par une étape E24 au cours de laquelle on agrandit la zone sélectionnée ZS.

L'étape E24 est suivie par une étape E26 au cours de laquelle on déplace le curseur au centre de la zone sélectionnée ZS ainsi agrandie.

L'étape E26 est suivie par une étape E28 au cours de laquelle on incrémente la profondeur courante NP d'une unité. L'étape E28 est suivie par l'étape E6 déjà décrite de représentation graphique de la partition.

Si à l'étape E8 on détecte que la touche 40 RETOUR a été sélectionnée, l'étape E8 est suivie par une étape E30 au cours de laquelle on détermine si la profondeur courante NP est strictement supérieure à 1. Si tel n'est pas le cas, cela signifie qu'il n'est pas possible de dézoomer et le procédé retourne à l'étape E6 de représentation graphique de la partition.

Si la profondeur courante NP est strictement supérieure à 1, on affecte la variable ZS avec l'identifiant de la zone ou de la sous-zone de niveau NP-1 dont la partition avait permis d'obtenir la zone courante.

L'étape E32 est suivie par une étape E34 au cours de laquelle on vérifie si la profondeur courante NP est supérieure ou égale à une constante NA correspondant au niveau de profondeur déclenchant le zoom automatique.

Si tel est le cas, l'étape E34 est suivie par une étape E36 au cours de laquelle on dézoome la zone sélectionnée ZS.

L'étape E36 est suivie par une étape E38 au cours de laquelle on déplace le curseur au centre de la zone sélectionnée ZS ainsi dézoomée.

Lorsqu'il est déterminé à l'étape E34 que la profondeur courante NP est inférieure à la profondeur NA de déclenchement du zoom automatique, la zone sélectionnée n'est pas agrandie. Dans ce cas, l'étape E34 est directement suivie par l'étape E38 au cours de laquelle on déplace le curseur au centre de la zone sélectionnée ZS sans que celle-ci ait été dézoomée.

L'étape E38 est suivie par une étape E40 au cours de laquelle on décrémente la profondeur courante NP d'une unité. L'étape E40 est suivie par l'étape E6 déjà décrite de représentation graphique de la partition.

Si à l'étape E8 on détecte que la touche 35 OK a été sélectionnée, on analyse, au cours d'une étape E42, le contenu de la zone sélectionnée pour déterminer le nombre de liens cliquables dans cette zone.

Au cours d'une étape E44 on détermine si le nombre de liens cliquables dans la zone sélectionnée est exactement 1. Si tel est le cas, l'étape E44 est suivie par une étape E46 d'activation de ce lien.

Cette étape E46 d'activation du lien est suivie par l'étape E2 d'initialisation.

S'il est déterminé à l'étape qu'il n'y a pas un unique lien cliquable dans la zone sélectionnée, l'étape E44 est suivie par l'étape E6 déjà décrite de représentation graphique de la partition.

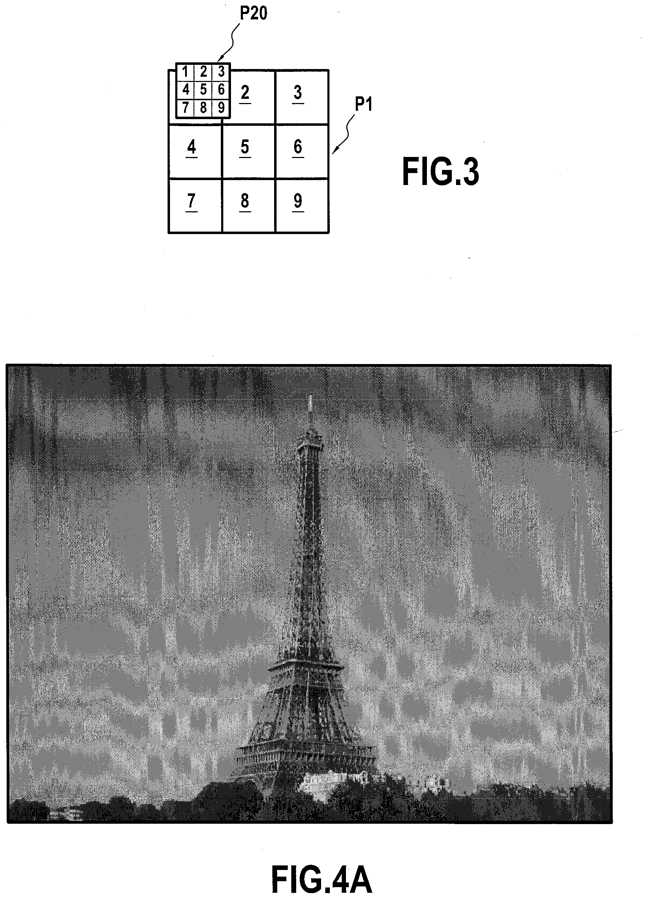

Sur l'écran de la Figure 1 on a représenté une partition 3x3 correspondant aux touches du pavé 30. La figure 3 représente la partition P1 de premier niveau et une partition P20 de niveau 2 atteinte lorsque l'utilisateur appuie sur la touche 1 de la télécommande depuis le premier niveau P1 de partition.

Les figures 4A à 4C illustrent comment l'invention permet de zoomer sur le haut de la Tour Eiffel représentée sur l'écran 10 (figure 4A).

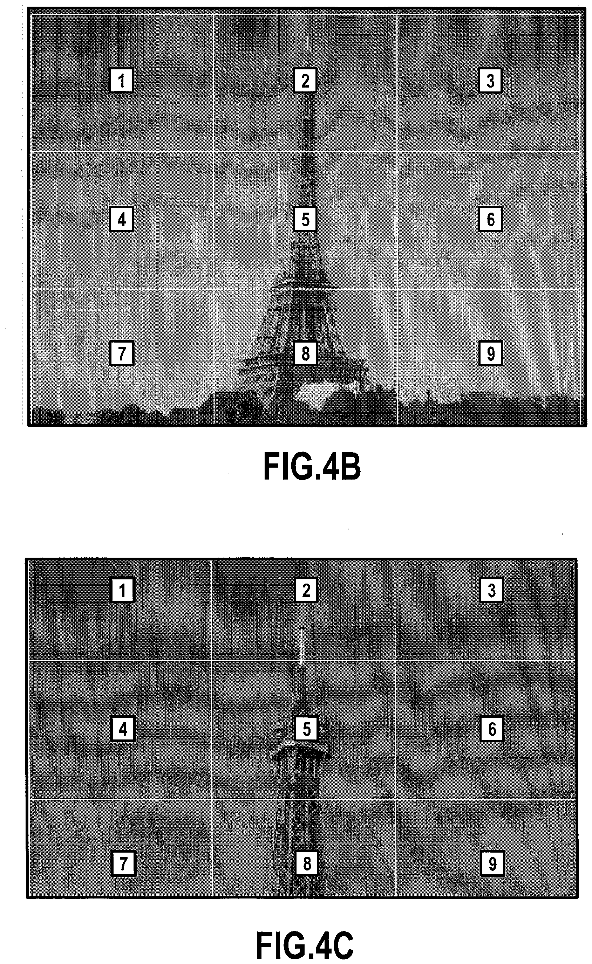

En appuyant sur la touche 2 de la télécommande située en première ligne deuxième colonne du pavé 30, la zone située en première ligne deuxième colonne de la partition P1 (Figure 4B) et obtient le contenu de la Figure 4C centrée sur le haut de la Tour Eiffel.

Ce nouveau contenu peut aussi être partitionné pour zoomer sur un détail.

## Revendications

1. Procédé de navigation dans un contenu affiché sur un écran (50) au moyen d'une télécommande (20) comportant un pavé (30) numérique à 9 touches agencées sur une matrice à 3 lignes et 3 colonnes et une touche (35) permettant de sélectionner un lien cliquable, ledit procédé comportant :
- une étape (E2) d'initialisation d'une variable (ZS) représentant un identifiant d'une zone sélectionnée correspondant à l'écran dans son intégralité;
- une étape de partitionnement et d'affichage (E6) dudit contenu en un ensemble de zones constituant une partition (P1) de premier niveau, le nombre de zones de ladite partition étant identique au nombre de touches dans ledit pavé (30) de ladite télécommande, lesdites zones étant agencées au sein dudit contenu selon une configuration similaire à la configuration des touches dans ledit pavé ;
- une étape (E6) de représentation graphique ou sonore du partitionnement dudit contenu ;
- sur détection d'une action d'un utilisateur sur une touche dudit pavé :
(i) le partitionnement de la zone sélectionnée en un ensemble de sous-zones constituant une partition de niveau suivant, le nombre de ces sous-zones étant identique au nombre de touches dans ledit pavé de ladite télécommande, lesdites sous-zones étant agencées au sein de ladite zone selon une configuration similaire à la configuration des touches dans ledit pavé,
(ii) la variable (ZS) identifiant de la zone sélectionnée étant affectée à l'identifiant de la sous-zone qui occupe dans cette nouvelle partition, la position de la touche sélectionnée dans ledit pavé ;
(iii) une étape d'agrandissement de la sous-zone sélectionnée, sur toute la surface dudit écran ;
- sur détection d'une action d'un utilisateur sur la touche (35) permettant de sélectionner un lien cliquable :
(i) une étape (E42) de détermination d'un nombre de liens cliquables dans la zone sélectionnée ;
(ii) une étape (E46) d'activation du lien cliquable si ledit nombre de liens déterminé est exactement 1.

2. Procédé de navigation selon la revendication 1, **caractérisé en ce qu'**il comporte une étape d'affichage d'un pointeur dans la zone ou dans la sous-zone sélectionnée.

3. Procédé de navigation selon la revendication 2, **caractérisé en ce que** ledit pointeur est positionné au centre de la zone ou de la sous-zone sélectionnée.

4. Procédé de navigation selon la revendication 2, **caractérisé en ce que** ledit pointeur est positionné sur un lien de la zone ou de la sous-zone sélectionnée, ledit lien étant activable par un appui sur une touche de ladite télécommande.

## Patentansprüche

1. Verfahren zur Navigation in einem auf einem Bildschirm (50) angezeigten Inhalt mittels einer Fernbedienung (20), die einen Ziffernblock (30) mit 9 Tasten, die auf einer Matrix aus 3 Zeilen und 3 Spalten eingerichtet sind, und eine Taste (35) aufweist, die erlaubt, einen klickbaren Link zu wählen, wobei das Verfahren aufweist:
- einen Schritt (E2) der Initialisierung einer Variablen (ZS), die eine Kennung einer ausgewählten Zone darstellt, die dem Bildschirm in seiner Gesamtheit entspricht,
- einen Schritt der Partitionierung und der Anzeige (E6) des Inhalts in einer Anordnung von Zonen, die eine Partition (P1) erster Ebene bildet, wobei die Anzahl der Zonen der Partition mit der Anzahl der Tasten in dem Ziffernblock (30) der Fernbedienung identisch ist, wobei die Zonen innerhalb des Inhalts gemäß einer Konfiguration eingerichtet sind, die der Konfiguration der Tasten in dem Ziffernblock ähnelt;
- einen Schritt (E6) der grafischen oder akustischen Darstellung der Partitionierung des Inhalts;
- bei Detektion einer Aktion eines Benutzers auf einer Taste des Ziffernblocks:
(i) die Partitionierung der ausgewählten Zone in eine Anordnung von Unterzonen, die einer Partition einer folgenden Ebene entspricht, wobei die Anzahl dieser Unterzonen mit der Anzahl der Tasten im Ziffernblock der Fernsteuerung identisch ist, wobei die Unterzonen innerhalb der Zone gemäß einer Konfiguration eingerichtet sind, die der Konfiguration der Tasten in dem Ziffernblock ähnelt,
(ii) die Variable (ZS) als Kennung der gewählten Zone, die der Kennung der Unterzone zugeordnet ist, die in dieser neuen Partition der Position der im Ziffernblock gewählten Taste entspricht;
(iii) einen Vergrößerungsschritt der ausgewählten Zone über die gesamte Oberfläche des Bildschirms;
- bei Detektion einer Aktion eines Benutzers auf die Taste (35), die erlaubt, einen klickbaren Link auszuwählen:
(i) einen Schritt (E42) des Bestimmens einer Anzahl klickbarer Links in der ausgewählten Zone;
(ii) einen Aktivierungsschritt (E46) des klickbaren Links, wenn die bestimmte Linkanzahl genau 1 ist.

2. Navigationsverfahren nach Anspruch 1, **dadurch gekennzeichnet, dass** es einen Schritt der Anzeige eines Zeigers in der Zone oder in der ausgewählten Unterzone aufweist.

3. Navigationsverfahren nach Anspruch 2, **dadurch gekennzeichnet, dass** der Zeiger im Zentrum der Zone oder der ausgewählten Unterzone positioniert ist.

4. Navigationsverfahren nach Anspruch 2, **dadurch gekennzeichnet, dass** der Zeiger auf einem Link der Zone oder der ausgewählten Unterzone positioniert ist, wobei der Link durch einen Druck auf eine Taste der Fernbedienung aktivierbar ist.

## Claims

1. A method for navigating through a content displayed on a screen (50) by means of a remote control (20) including a numeric keypad (30) with 9 keys arranged on a matrix with 3 rows and 3 columns and a key (35) for selecting a clickable link, said method including:
- a step (E2) of initializing a variable (SA) representing an identifier of a selected area corresponding to the screen in its entirety;
- a step of partitioning and displaying (E6) said content in a set of areas constituting a first-level partition (P1), the number of areas of said partition being identical to the number of keys in said keypad (30) of said remote control, said areas being arranged within said content according to a configuration similar to the configuration of the keys in said keypad;
- a step (E6) of graphical or sound representation of the partitioning of said content;
- upon detection of an action by a user on a key of said keypad:
(i) the partitioning of the selected area into a set of sub-areas constituting a next-level partition, the number of these sub-areas being identical to the number of keys in said keypad of said remote control, said sub-areas being arranged within said area according to a configuration similar to the configuration of the keys in said keypad,
(ii) the variable (SA) identifying the selected area being assigned to the identifier of the sub-area which occupies, in this new partition, the position of the key selected in said keypad;
(iii) a step of enlarging the selected sub-area over the entire surface of said screen;
- upon detection of an action by a user on the key (35) for selecting a clickable link:
(i) a step (E42) of determining a number of clickable links in the selected area;
(ii) a step (E46) of activating the clickable link if said determined number of links is exactly 1.

2. The navigation method according to claim 1, **characterized in that** it includes a step of displaying a pointer in the selected area or sub-area.

3. The navigation method according to claim 2, **characterized in that** said pointer is positioned at the center of the selected area or sub-area.

4. The navigation method according to claim 2, **characterized in that** said pointer is positioned on a link of the selected area or sub-area, said link being activatable by pressing a key on said remote control.
